(19) Europäisches Patentamt
European Patent Office
Office européen des brevets

(11) **EP 3 583 009 B1**

(12) **EUROPÄISCHE PATENTSCHRIFT**

(45) Veröffentlichungstag und Bekanntmachung des Hinweises auf die Patenterteilung:
**10.08.2022   Patentblatt 2022/32**

(21) Anmeldenummer: **17818510.4**

(22) Anmeldetag: **13.12.2017**

(51) Internationale Patentklassifikation (IPC):
**B60W 30/09** (2012.01)

(52) Gemeinsame Patentklassifikation (CPC):
**B60W 30/09;** B60W 2520/04; B60W 2520/10; B60W 2554/00

(86) Internationale Anmeldenummer:
**PCT/EP2017/082618**

(87) Internationale Veröffentlichungsnummer:
**WO 2018/149536 (23.08.2018 Gazette 2018/34)**

(54) **VERFAHREN UND VORRICHTUNG ZUR FESTLEGUNG EINER MAXIMALGESCHWINDIGKEIT FÜR EIN FAHRZEUG UND AUTOMATISIERTES FAHRSYSTEM**

METHOD AND DEVICE FOR DETERMINING A MAXIMUM SPEED FOR A VEHICLE AND AUTOMATIC DRIVE SYSTEM

PROCÉDÉ ET DISPOSITIF POUR ÉTABLIR UNE VITESSE MAXIMALE POUR UN VÉHICULE ET SYSTÈME DE CONDUITE AUTOMATISÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2017   DE 102017202363**

(43) Veröffentlichungstag der Anmeldung:
**25.12.2019   Patentblatt 2019/52**

(73) Patentinhaber: **Robert Bosch GmbH 70442 Stuttgart (DE)**

(72) Erfinder:
• **FRIEDRICH, Thomas 74379 Ingersheim (DE)**
• **ROSS, Hans-Leo 64653 Lorsch (DE)**

(56) Entgegenhaltungen:
WO-A2-91/09275          DE-A1-102014 010 085
DE-A1-102015 207 038     GB-A- 2 310 731

EP 3 583 009 B1

**Beschreibung**

Die vorliegende Erfindung betrifft ein Verfahren zur Festlegung einer Maximalgeschwindigkeit für ein Fahrzeug, eine Vorrichtung zur Festlegung einer Maximalgeschwindigkeit für ein Fahrzeug und ein automatisiertes Fahrsystem für ein Fahrzeug.

Stand der Technik

Die Bremsleistung von Notbremsassistenten für Fahrzeuge kann aus mehreren Gründen reduziert sein. So kann sich beispielsweise die Erkennungszeit zur Erkennung von Gefahrensituationen aufgrund schlechter Witterungsbedingungen vergrößern. Weiter kann sich die Kommunikation zwischen den für die Notbremsung erforderlichen Komponenten aufgrund eines Defekts verschlechtern und dadurch die Kommunikationszeit erhöht werden. Schließlich ist auch eine Verschlechterung von hydraulischen Elementen des Bremssystems möglich, sodass sich der Bremsweg verlängert.

Aus der Druckschrift DE 10 2013 213 169 A1 ist es bekannt, das Fahrzeug nach Erkennen eines Defekts von Komponenten des Fahrzeugs in einen Notbetrieb zu versetzen und zum Stillstand zu bringen. Aus der DE 10 2014 010085 A1 ist ein Verfahren zum Durchführen eines automatischen Einpark- und/oder Ausparkmanövers eines Fahrzeugs bekannt. Die DE 10 2015 207038 A1 offenbart ein Verfahren zum automatischen Bremsen eines Kraftfahrzeugs beim Parken oder Rangieren. Aus der GB 2310731 A ist eine Abstandsregelung zu einem Hindernis bekannt. Schließlich offenbart die WO 9109275 A2 ein System zur Bestimmung einer Fahrzeugposition.

Offenbarung der Erfindung

Die Erfindung stellt ein Verfahren zur Festlegung einer Maximalgeschwindigkeit für ein Fahrzeug mit den Merkmalen des Patentanspruchs 1, eine Vorrichtung zur Festlegung einer Maximalgeschwindigkeit für ein Fahrzeug mit den Merkmalen des Patentanspruchs 4 und ein automatisiertes Fahrsystem für ein Fahrzeug mit den Merkmalen des Patentanspruchs 7 bereit.

Gemäß einem ersten Aspekt betrifft die Erfindung demnach ein Verfahren zur Festlegung einer Maximalgeschwindigkeit für ein Fahrzeug, mit den Schritten: Empfangen von Zustandsinformationen über einen Zustand von mindestens einer Fahrzeugkomponente des Fahrzeugs, wobei die Zustandsinformationen Informationen über einen Zustand eines Bremssystems des Fahrzeugs umfassen; Berechnen einer Bremszeit von einem Beginn eines Bremsvorgangs bis zum Stillstand des Fahrzeugs anhand der Informationen über den Zustand des Bremssystems; wobei das Berechnen der Bremszeit das Berechnen einer ersten Bremszeit von einem Beginn des Bremsvorgangs bis zum Erreichen der vollen Bremsleistung, und das Berechnen einer zweiten Bremszeit vom Erreichen der vollen Bremsleistung bis zum Stillstand des Fahrzeugs umfasst; und Festlegen einer Maximalgeschwindigkeit des Fahrzeugs anhand der Zustandsinformationen, derart, dass ein Anhalteweg des Fahrzeugs von einer Erkennung eines Gefahrenzustands bis zum Stillstand des Fahrzeugs kleiner oder gleich einem vorgegebenen Wert ist, wobei die Maximalgeschwindigkeit unter Berücksichtigung der Bremszeit festgelegt wird.

Gemäß einem weiteren Aspekt betrifft die Erfindung eine Vorrichtung zur Festlegung einer Maximalgeschwindigkeit für ein Fahrzeug, mit einer Eingabeschnittstelle, welche dazu ausgebildet ist, Zustandsinformationen über einen Zustand von mindestens einer Fahrzeugkomponente des Fahrzeugs zu empfangen, wobei die Zustandsinformationen Informationen über einen Zustand eines Bremssystems des Fahrzeugs umfassen; und einer Bestimmungseinrichtung, welche dazu ausgebildet ist, anhand der Informationen über den Zustand des Bremssystems eine Bremszeit von einem Beginn des Bremsvorgangs bis zum Stillstand des Fahrzeugs zu berechnen, wobei das Berechnen der Bremszeit das Berechnen einer ersten Bremszeit von einem Beginn des Bremsvorgangs bis zum Erreichen der vollen Bremsleistung, und das Berechnen einer zweiten Bremszeit vom Erreichen der vollen Bremsleistung bis zum Stillstand des Fahrzeugs umfasst, und wobei die Bestimmungseinrichtung dazu ausgebildet ist, anhand der Zustandsinformationen die Maximalgeschwindigkeit des Fahrzeugs derart festzulegen, dass ein Anhalteweg des Fahrzeugs von einer Erkennung eines Gefahrenzustands bis zum Stillstand des Fahrzeugs kleiner oder gleich einem vorgegebenen Wert ist, wobei die Bestimmungseinrichtung dazu ausgebildet ist, die Maximalgeschwindigkeit unter Berücksichtigung der Bremszeit festzulegen.

Gemäß einem weiteren Aspekt betrifft die Erfindung ein automatisiertes Fahrsystem für ein Fahrzeug, mit einer Vorrichtung zur Festlegung einer Maximalgeschwindigkeit für das Fahrzeug und mindestens einer Fahrzeugkomponente, welche mit der Vorrichtung gekoppelt ist und dazu ausgebildet ist, Zustandsinformationen an die Vorrichtung zu übertragen.

Bevorzugte Ausführungsformen sind Gegenstand der jeweiligen Unteransprüche. Vorteile der Erfindung

Unter Fahrzeugkomponenten des Fahrzeugs werden vorzugsweise Vorrichtungen des Fahrzeugs verstanden, welche für das Abbremsen des Fahrzeugs, beispielsweise durch einen automatisierten Notbremsassistenten, erforderlich sind.

Die Zustandsinformationen über den Zustand der Fahrzeugkomponenten umfassen vorzugsweise Informationen über eine mögliche Verschlechterung der Fahrzeugkomponenten. Die Zustandsinformationen können auch Informationen über eine Zeit umfassen, welche die entsprechende Fahrzeugkomponente für ihren jeweiligen Beitrag zum Abbremsen des Fahrzeugs benötigt.

Verschlechtert sich der Zustand von einer oder mehreren Fahrzeugkomponenten, so wird sich im Allgemeinen der Anhalteweg des Fahrzeugs für eine vorgegebene Geschwindigkeit des Fahrzeugs erhöhen. Dadurch kann jedoch im Einzelfall ein sicheres Abbremsen des Fahrzeugs nicht mehr garantiert werden. Erfindungsgemäß wird daher die Maximalgeschwindigkeit des Fahrzeugs derart festgelegt, dass der Anhalteweg einen vorgegebenen Schwellenwert nicht überschreitet. Somit sind ein sicheres Abbremsen und dadurch eine Verhinderung von Unfällen jederzeit möglich.

Gleichzeitig wird die Maximalgeschwindigkeit vorzugsweise so groß wie möglich gewählt, ohne dass der Anhalteweg jedoch größer als der vorgegebene Wert wird. Dies ermöglicht es dem Fahrer oder einem automatischen Fahrsystem, das Fahrzeug in eine sichere Abstellposition oder zu einer Reparaturwerkstatt zu befördern, ohne jedoch ein Hindernis für andere Verkehrsteilnehmer darzustellen.

Vorzugsweise umfassen die Zustandsinformationen Informationen über einen Zustand von mindestens einem Fahrzeugsensor des Fahrzeugs, wobei anhand der Informationen über den Zustand des mindestens einen Fahrzeugsensors eine Erkennungszeit berechnet wird, welche zur Erkennung des Gefahrenzustandes benötigt wird. Die Maximalgeschwindigkeit wird unter Berücksichtigung der Erkennungszeit festgelegt. Die Fahrzeugsensoren können beispielsweise Radarsensoren, Infrarotsensoren oder Fahrzeugkameras umfassen, welche ein Fahrzeugumfeld des Fahrzeugs überwachen und zur Erkennung von Objekten im Fahrzeugumfeld ausgebildet sind. Die Informationen über den Zustand können Informationen über eine Erkennungsgenauigkeit des mindestens einen Fahrzeugsensors umfassen, welche beispielsweise anhand von Witterungsbedingungen um das Fahrzeug herum ermittelt werden.

Gemäß einer Weiterbildung umfassen die Zustandsinformationen Informationen über einen Zustand eines Bremssystems des Fahrzeugs, wobei anhand der Informationen über den Zustand des Bremssystems eine Bremszeit von einem Beginn des Bremsvorgangs bis zum Stillstand des Fahrzeugs berechnet wird und wobei die Maximalgeschwindigkeit unter Berücksichtigung der Bremszeit festgelegt wird.

Vorzugsweise kann das Berechnen der Bremszeit das Berechnen einer ersten Bremszeit von einem Beginn des Bremsvorgangs bis zum Erreichen der vollen Bremsleistung und das Berechnen einer zweiten Bremszeit vom Erreichen der vollen Bremsleistung bis zum Stillstand des Fahrzeugs umfassen. Beispielsweise kann das Bremssystem ein Antiblockiersystem umfassen. Das Bremssystem kann auch ein Hydrauliksystem umfassen. Die erste Bremszeit entspricht derjenigen Zeit, welche zum Aufbauen des Bremsdrucks des Hydrauliksystems benötigt wird. Die Verzögerung des Fahrzeugs während der Druckaufbauphase ist im Allgemeinen nicht konstant, wohingegen während der zweiten Bremszeit die Verzögerung im Wesentlichen konstant ist.

Gemäß einer Weiterbildung des Verfahrens können die Zustandsinformationen Informationen über einen Zustand eines Kommunikationssystems zwischen dem Bremssystem und dem mindestens einen Fahrzeugsensor umfassen. Anhand der Informationen über den Zustand des Kommunikationssystems wird eine Kommunikationszeit für die Kommunikation zwischen dem Bremssystem und dem mindestens einen Fahrzeugsensor berechnet und die Maximalgeschwindigkeit wird unter Berücksichtigung der Kommunikationszeit festgelegt. Das erfindungsgemäße Verfahren berücksichtigt somit etwaige Zeitverluste aufgrund einer suboptimalen Kommunikation zwischen den für die Notbremsung erforderlichen Komponenten.

Gemäß einer Weiterbildung der Vorrichtung umfassen die Zustandsinformationen Informationen über einen Zustand von mindestens einem Fahrzeugsensor des Fahrzeugs, wobei die Bestimmungseinrichtung dazu ausgebildet ist, anhand der Informationen über den Zustand des mindestens einen Fahrzeugsensors eine Erkennungszeit zu berechnen, welche zur Erkennung des Gefahrenzustandes benötigt wird. Die Bestimmungseinrichtung ist weiter dazu ausgebildet, die Maximalgeschwindigkeit unter Berücksichtigung der Erkennungszeit festzulegen.

Gemäß einer Weiterbildung der Vorrichtung umfassen die Zustandsinformationen Informationen über einen Zustand eines Bremssystems des Fahrzeugs, wobei die Bestimmungseinrichtung dazu ausgebildet ist, anhand der Informationen über den Zustand des Bremssystems eine Bremszeit von einem Beginn des Bremsvorgangs bis zum Stillstand des Fahrzeugs zu berechnen und die Maximalgeschwindigkeit unter Berücksichtigung der Bremszeit festzulegen.

Gemäß einer Weiterbildung der Vorrichtung ist die Bestimmungseinrichtung dazu ausgebildet ist, zum Berechnen der Bremszeit eine erste Bremszeit von einem Beginn des

Bremsvorgangs bis zum Erreichen der vollen Bremsleistung zu berechnen, und eine zweite Bremszeit vom Erreichen der vollen Bremsleistung bis zum Stillstand des Fahrzeugs zu berechnen.

Gemäß einer Weiterbildung der Vorrichtung umfassen die Zustandsinformationen Informationen über einen Zustand eines Kommunikationssystems zwischen dem Bremssystem und dem mindestens einen Fahrzeugsensor, wobei die Bestimmungseinrichtung dazu ausgebildet ist, anhand der Informationen über den Zustand des Kommunikationssystems eine Kommunikationszeit für die Kommunikation zwischen dem Bremssystem und dem mindestens einen Fahrzeugsensor zu berechnen und die Maximalgeschwindigkeit unter Berücksichtigung der Kommunikationszeit festzulegen.

Kurze Beschreibung der Zeichnungen

Es zeigen:

Figur 1    ein schematisches Blockdiagramm einer Vorrichtung zur Festlegung einer Maximalgeschwindigkeit für ein Fahrzeug gemäß einer Ausführungsform der Erfindung;

Figur 2    eine Illustration eines Anhaltewegs eines Fahrzeugs unter Normalbedingungen bzw. unter verschlechterten Bedingungen bei jeweils gleicher Anfangsgeschwindigkeit;

Figur 3    Illustration des Anhaltewegs unter Normalbedingungen bzw. unter verschlechterten Bedingungen und reduzierter Anfangsgeschwindigkeit;

Figur 4    ein schematisches Blockdiagramm eines automatisierten Fahrsystems für ein Fahrzeug gemäß einer Ausführungsform der Erfindung; und

Figur 5    ein Flussdiagramm zur Erläuterung eines Verfahrens zur Festlegung einer Maximalgeschwindigkeit für ein Fahrzeug gemäß einer Ausführungsform der Erfindung.

In allen Figuren sind gleiche bzw. funktionsgleiche Elemente und Vorrichtungen mit denselben Bezugszeichen versehen. Verschiedene Ausführungsformen können beliebig miteinander kombiniert werden, sofern dies sinnvoll ist.

Beschreibung der Ausführungsbeispiele

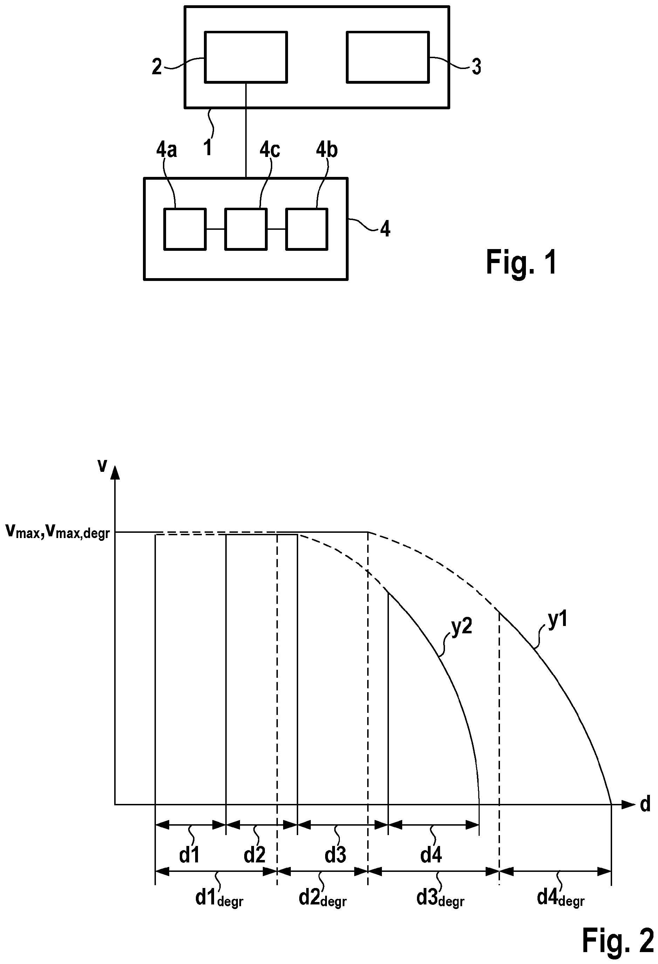

Figur 1 zeigt ein Blockdiagramm einer Vorrichtung 1 zur Festlegung einer Maximalgeschwindigkeit für ein Fahrzeug.

Die Vorrichtung 1 umfasst eine Eingabeschnittstelle 2, welche dazu ausgebildet ist, Zustandsinformationen über einen Zustand von Fahrzeugkomponenten 4 zu empfangen. Die Eingabeschnittstelle 2 kann hierzu mit den Fahrzeugkomponenten 4 gekoppelt werden. Die Eingabeschnittstelle 2 kann insbesondere über ein Bussystem des Fahrzeugs mit den Fahrzeugkomponenten 4 koppelbar sein.

Die Vorrichtung 1 umfasst weiter eine Bestimmungseinrichtung 3, welche dazu ausgebildet ist, anhand der Zustandsinformationen die Maximalgeschwindigkeit $v_{max}$ des Fahrzeugs derart festzulegen, dass ein Anhalteweg $d_{anhalte}$ des Fahrzeugs von einer Erkennung eines Gefahrenzustands bis zum Stillstand des Fahrzeugs kleiner oder gleich einem vorgegebenen Wert ist.

Die Fahrzeugkomponenten 4 umfassen mindestens einen Fahrzeugsensor 4a, welcher Radarsensoren, Infrarotsensoren oder Fahrzeugkameras umfassen kann. Der Fahrzeugsensor 4a ist zum Bereitstellen von Sensordaten bzw. Umfelddaten bezüglich eines Fahrzeugumfelds des Fahrzeugs ausgebildet. Der Fahrzeugsensor 4a umfasst vorzugsweise eine Erkennungseinrichtung, welche dazu ausgebildet ist, anhand der Sensordaten eine Gefahrensituation zu erkennen.

Die Fahrzeugkomponenten 4 umfassen weiter ein Bremssystem 4b, welches dazu ausgebildet ist, das Fahrzeug abzubremsen. Das Bremssystem 4b umfasst vorzugsweise ein hydraulisches Bremssystem, beispielsweise ein Plungerbasiertes Bremssystem oder ein Kolbenbremssystem. Das Bremssystem kann weiter ein Antiblockiersystem umfassen. Das Bremssystem kann ein automatisches Bremssystem umfassen, welches bei einer Erkennung eines Gefahrenzustands durch den mindestens einen Fahrzeugsensor 4a automatisch das Fahrzeug bis zum Stillstand abbremst.

Die Fahrzeugkomponenten 4 umfassen weiter ein Kommunikationssystem 4c, welches mit dem Bremssystem 4b und dem mindestens einen Fahrzeugsensor 4a gekoppelt ist und dazu ausgebildet ist, Informationen von dem mindestens einen Fahrzeugsensor 4a, gegebenenfalls über mindestens ein Steuergerät, an das Bremssystem 4b zu übertragen. Das Kommunikationssystem 4c kann ein Bussystem des Fahrzeugs umfassen.

Die Fahrzeugkomponenten 4a, 4b, 4c können vorzugsweise jeweils entsprechende Informationen über den Zustand der jeweiligen Fahrzeugkomponente 4a, 4b, 4c bereitstellen und an die Eingabeschnittstelle 2 übertragen.

Diese Zustandsinformationen können beispielsweise Informationen über einen Zustand des mindestens einen Fahrzeugsensors 4a umfassen. Diese können beispielsweise eine Erkennungszeit TD ("time to detect") umfassen, welche der mindestens eine Fahrzeugsensor 4a benötigt, um ein Objekt, etwa einen Fußgänger, sensorisch zu erfassen, zu klassifizieren, und einen Gefahrenzustand zu erkennen. Die Erkennungszeit TD entspricht somit derjenigen Zeit, welche zur Erkennung des Gefahrenzustandes durch den Fahrzeugsensor 4a benötigt wird. Falls nun mindestens einer der Fahrzeugsensoren 4a aufgrund eines Defekts ausfällt oder aufgrund von geänderten Umgebungsbedingungen, beispielsweise schlechter Witterungsverhältnisse, eine geringere Erkennungsgenauigkeit aufweist, so reduziert sich die Erkennungszeit TD entsprechend. Die Informationen über den Zustand des mindestens einen Fahrzeugsensors 4a können die derart reduzierte Erkennungszeit TD umfassen. Die Informationen über den Zustand des mindestens einen Fahrzeugsensors 4a können jedoch auch Informationen bezüglich eines Defekts oder bezüglich der Betriebszustände des Fahrzeugsensors 4a umfassen, wobei die Bestimmungseinrichtung 3 dazu ausgebildet ist, die Erkennungszeit TD anhand dieser Informationen zu berechnen.

Die Zustandsinformationen können weiter Informationen über einen Zustand des Bremssystems 4b umfassen, beispielsweise Informationen, ob sich das Bremssystem 4b in einem Normalzustand oder in einem verschlechterten Zustand befindet. Die Bestimmungseinrichtung 3 ist dazu ausgebildet, anhand der Informationen über den Zustand des Bremssystems 4b eine Bremszeit TB ("time to break") von einem Beginn des Bremsvorgangs bis zum Stillstand des Fahrzeugs zu berechnen. Die Bestimmungseinrichtung 3 berechnet hierbei eine erste Bremszeit TTL ("time to lock"), von einem Beginn des Bremsvorgangs bis zum Erreichen der vollen Bremsleistung. Bei einem hydraulischen Bremssystem entspricht dies derjenigen Zeit, welche zum Aufbauen des vollständigen Bremsdrucks benötigt wird. Weiter berechnet die Bestimmungseinrichtung 3 eine zweite Bremszeit $T_{stop}$ vom Erreichen der vollen Bremsleistung bis zum Stillstand des Fahrzeugs. Dies entspricht derjenigen Zeit, welche das Bremssystem zum Abbremsen des Fahrzeugs bei vollem Bremsdrucks benötigt. Die Bremszeit TB entspricht der Summe der ersten Bremszeit TTL und der zweiten Bremszeit $T_{stop}$.

Weiter umfassen die Zustandsinformationen Informationen über einen Zustand des Kommunikationssystems 4c, wobei die Bestimmungseinrichtung 3 dazu ausgebildet ist, anhand der Informationen über den Zustand des Kommunikationssystems 4c eine Kommunikationszeit TT ("time to travel") für die Kommunikation zwischen dem Bremssystem 4b und dem mindestens einen Fahrzeugsensor 4a zu berechnen.

Die jeweiligen Zustandsinformationen können mittels Erkennungsalgorithmen durch die jeweiligen Fahrzeugkomponenten 4 selbst ermittelt werden. Die Zustandsinformationen können jedoch auch mittels einer Sensoreinrichtung der Vorrichtung 1 ermittelt werden.

Gemäß weiteren Ausführungsformen können die Zustandsinformationen bereits die Erkennungszeit TD, die Bremszeit TB und/oder die Kommunikationszeit TT selbst umfassen.

Die Bestimmungseinrichtung 3 ist dazu ausgebildet, einen maximalen Anhalteweg $d_{anhalte}$ des Fahrzeugs, welches sich anfänglich mit einer Maximalgeschwindigkeit $v_{max}$ bewegt, anhand folgender Formel zu berechnen:

$$d_{anhalte} = d1 + d2 + d3 + d4,$$

mit d1 = $TD \cdot v_{max}$, d2 = $TT \cdot v_{max}$, d3 = $TTL \cdot v_{max} - 1/6 \cdot k \cdot TTL^3$ und d4 = $v_{rest}^2/(2 \cdot a_{max})$.

Das erste Anhaltewegsegment d1 entspricht der während der Erkennungszeit TD zurückgelegten Strecke, das zweite Anhaltewegsegment d2 entspricht der während der Kommunikationszeit TT zurückgelegten Strecke, das dritte Anhaltewegsegment d3 entspricht der während der ersten Bremszeit TTL zurückgelegten Strecke und das vierte Anhaltewegsegment D4 entspricht der während der zweiten Bremszeit Tstop zurückgelegten Strecke.

Die Größe $a_{TTL} = k \cdot TTL$ ist die Verzögerung während der Druckaufbauphase, wobei $k = a_{max}/TTL$ die lineare Steigung darstellt. Hierbei ist $a_{max}$ die maximale Verzögerung, welche das Bremssystem 4b während der zweiten Bremszeit Tstop auf das Fahrzeug ausübt. Die erste Integration von $a_{TTL}$ ist $v_{TTL} = 1/2 \cdot k \cdot TTL^2$ und die zweite Integration ist $d_{TTL} = 1/6 \cdot k \cdot TTL^3$, was dem zweiten Term des dritten Anhaltewegsegments d3 entspricht.

Während hier ein linearer Verlauf für die die Verzögerung angenommen wird, kann die Bestimmungseinrichtung 3 in Abhängigkeit von der Charakteristik des Bremssystems 4b auch eine nichtlineare Abhängigkeit der Verzögerung von der ersten Bremszeit TTL berücksichtigen, wobei sich die jeweiligen Formen entsprechend modifizieren.

Weiter ist $v_{rest} = v_{max} - 1/2 \cdot k \cdot TTL^2$ die Restgeschwindigkeit nach vollzogenem Druckaufbau, d. h. nach der ersten Bremszeit TTL. Einsetzen dieser Beziehung in die Gleichung für den Anhalteweg $d_{anhalte}$ ergibt folgende Beziehung:

$$d_{anhalte} = TD \cdot v_{max} + TT \cdot v_{max} + TTL \cdot v_{max} - 1/6.k \cdot TTL^3 + (v_{max} - 1/2.k \cdot TTL^2)^2/(2 \cdot a_{max})$$

In einem fehlerhaften bzw. degradierten Zustand können die erste Bremszeit TTL, die zweite Bremszeit Tstop, die Erkennungszeit TD und die Kommunikationszeit TT sowie die maximale Verzögerung $a_{max}$ von den entsprechenden

Werten im Normalzustand abweichen. Die Bestimmungseinrichtung 3 berechnet im degradierten Zustand den Anhalteweg $d_{anhalte}$ nach folgender Formel, wobei die Maximalgeschwindigkeit $v_{max,degr}$ einen freien Parameter darstellt:

$$d_{anhalte, degr} = TD_{degr} \cdot v_{max, degr} + TT_{degr} \cdot v_{max, degr} + TTL_{degr} \cdot v_{max, degr} - 1/6 \cdot k \cdot TTL_{degr}^3 + (v_{max, degr} - 1/2 \cdot k \cdot TTL_{degr}^2)^2/(2 \cdot a_{max, degr}).$$

Der Index "degr" steht hierbei für den Wert der jeweiligen Größe im degradierten Zustand.

Wird die Maximalgeschwindigkeit $v_{max}$ des Fahrzeugs nicht verändert, also falls gilt, dass $v_{max} = v_{max,degr}$, so ergibt sich das in Figur 2 illustrierte Szenario. Im Normalzustand ergibt sich der in Kurve y1 gezeigte Verlauf der Geschwindigkeit v in Abhängigkeit von der zurückgelegten Strecke d. Aufgrund der im degradierten Zustand verlängerten Anhaltewegsegmente $d1_{degr}$, $d2_{degr}$, $d3_{degr}$, $d4_{degr}$ verlängert sich der gesamte Anhalteweg, wie dem in Kurve y2 gezeigten Verlauf der Geschwindigkeit v zu entnehmen ist.

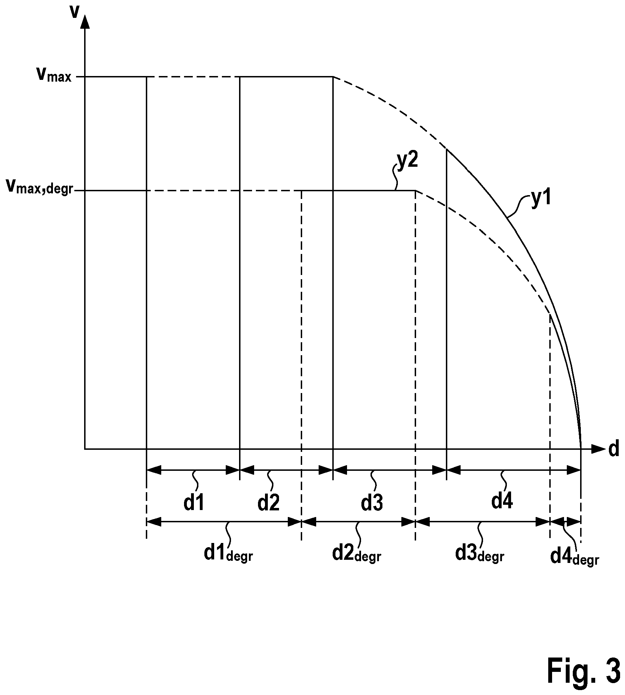

Die Bestimmungseinrichtung 3 ist nun dazu ausgelegt, die Maximalgeschwindigkeit $v_{max}$ derart zu berechnen, dass der Anhalteweg $d_{anhalte, degr}$ im degradierten Zustand, ausgehend von der Maximalgeschwindigkeit $v_{max,degr}$ im degradierten Zustand, gleich groß ist wie der Anhalteweg $d_{anhalte}$ im Normalzustand, ausgehend von der Maximalgeschwindigkeit $v_{max}$ im Normalzustand. Dies entspricht dem in Figur 3 illustrierten Szenario.

Die Bestimmungseinrichtung 3 berechnet somit die Maximalgeschwindigkeit $v_{max}$ unter der Bedingung $d_{anhalte} = d_{anhalte,degr}$. Durch Einsetzen und Umschreiben erhält man zuerst folgende Gleichung:

$$d_{anhalte} + 1/6 \cdot k \cdot TTL_{degr}^3 = TD_{degr} \cdot v_{max, degr} + TT_{degr} \cdot v_{max, degr} + TTL_{degr} \cdot v_{max, degr}$$
$$+ v_{max, degr}^2/(2 \cdot a_{max, degr}) - v_{max, degr} \cdot k \cdot TTL_{degr}^2/2 \cdot a_{max, degr} + 1/4 \cdot k^2 \cdot TTL_{degr}^4/(2 \cdot a_{max, degr})$$

und schließlich folgende Beziehung:

$$d_{anhalte} + 1/6 \cdot k \cdot TTL_{degr}^3 - 1/4 \cdot k^2 \cdot TTL_{degr}^4/(2 \cdot a_{max, degr}) = v_{max, degr} \cdot (TD_{degr} + TT_{degr} + TTL_{degr} - k \cdot TTL_{degr}^2/(2 \cdot a_{max,degr})) + v_{max, degr}^2/(2 \cdot a_{max, degr}).$$

Letzterer Ausdruck stellt eine Gleichung zweiter Ordnung für $v_{max,degr}$ dar, welche von der Bestimmungseinrichtung 3 entsprechend nach $v_{max,degr}$ aufgelöst wird. Der durch Lösen dieser Gleichung erhaltene Wert ist die von der Bestimmungseinrichtung 3 berechnete Maximalgeschwindigkeit.

Gemäß einer Weiterbildung kann die Vorrichtung 1 dazu ausgebildet sein, das Bremssystem 4b derart anzusteuern, dass die erste Bremszeit TTL reduziert wird, wenn die Bestimmungseinrichtung 3 anhand der Zustandsinformationen die Verschlechterung von mindestens einer Fahrzeugkomponente 4 erkennt. So kann die Vorrichtung 1 das Bremssystem 4b mittels eines Steuersignals derart ansteuern, dass eine hydraulische Bremsanlage des Bremssystems 4b mit einem Druck mit vorgegebener Größe, beispielsweise von 5 bar, vorbefüllt wird. Dadurch wird die Zeit, welche zum Erreichen der vollen Bremsleistung benötigt wird, reduziert.

Vorzugsweise kann die Vorrichtung 1 weiter dazu ausgebildet sein, ein Steuersignal auszugeben, um das Fahrzeug derart anzusteuern, dass eine maximal erreichbare Geschwindigkeit des Fahrzeugs durch die festgelegte Maximalgeschwindigkeit $v_{max}$ begrenzt ist.

Weiter kann die Vorrichtung 1 eine Anzeigeeinrichtung umfassen, welche die festgelegte Maximalgeschwindigkeit dem Fahrer des Fahrzeugs anzeigt.

Die Vorrichtung 1 kann ein Element eines Fahrerassistenzsystems für ein Fahrzeug sein, welches dazu ausgebildet ist, das Fahrzeug derart zu steuern, dass die Absolutgeschwindigkeit des Fahrzeugs stets kleiner ist als die Maximalgeschwindigkeit Vmax.

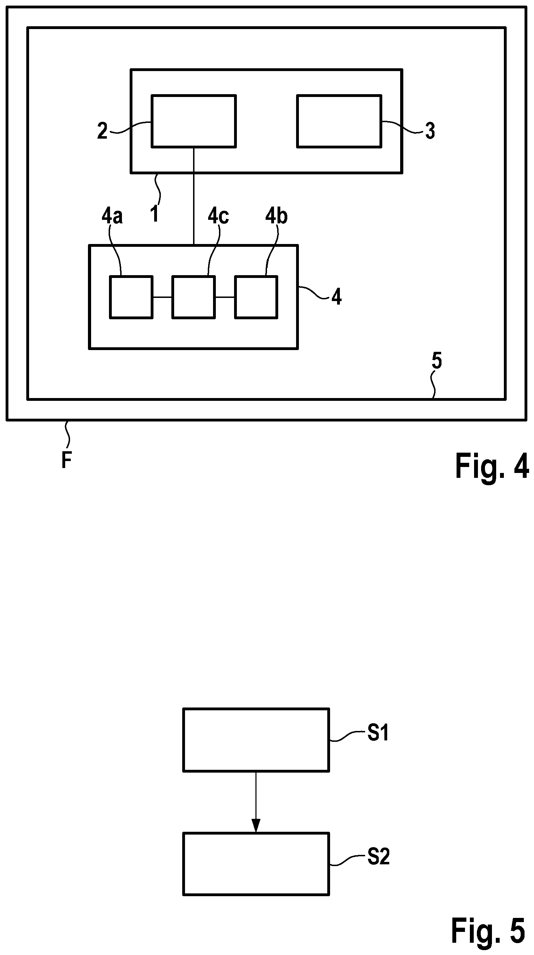

In Figur 4 ist ein automatisiertes Fahrsystem 5 für ein Fahrzeug F gemäß einer Ausführungsform der Erfindung illustriert. Das automatisierte Fahrsystem 5 umfasst eine Vorrichtung 1 zur Festlegung einer Maximalgeschwindigkeit $v_{max}$ für das Fahrzeug F gemäß einer der oben beschriebenen Ausführungsformen. Das automatisierte Fahrsystem 5 weist weiter mindestens eine Fahrzeugkomponente 4 auf, welche mit der Vorrichtung 1 gekoppelt ist und dazu ausgebildet ist, Zustandsinformationen an die Vorrichtung 1 zu übertragen. Die Fahrzeugkomponente 4 umfasst vorzugsweise wie oben beschrieben mindestens einen Fahrzeugsensor 4a, ein Bremssystem 4b und ein Kommunikationssystems 4c zwischen dem Bremssystem 4b und dem mindestens einen Fahrzeugsensor 4a.

Die Vorrichtung 1 umfasst weiter eine Bestimmungseinrichtung 3, welche, wie oben beschrieben, dazu ausgebildet ist, die Maximalgeschwindigkeit $v_{max}$ des Fahrzeugs festzulegen.

Das automatisierte Fahrsystem 5 weist vorzugsweise eine Steuereinrichtung auf, welche dazu ausgebildet ist, das Fahrzeug F autonom zu steuern, wobei eine Fahrgeschwindigkeit des Fahrzeugs F stets kleiner als die festgelegte

Maximalgeschwindigkeit $v_{max}$ ist.

In Figur 5 ist ein Flussdiagramm zur Erläuterung eines Verfahrens zur Festlegung einer Maximalgeschwindigkeit für ein Fahrzeug F illustriert.

In einem ersten Verfahrensschritt S1 werden Zustandsinformationen über einen Zustand von mindestens einer Fahrzeugkomponente 4 des Fahrzeugs F empfangen.

In einem weiteren Verfahrensschritt S2 wird eine Maximalgeschwindigkeit $v_{max}$ des Fahrzeugs F anhand der Zustandsinformationen festgelegt, wobei ein Anhalteweg des Fahrzeugs F von einer Erkennung eines Gefahrenzustands bis zum Stillstand des Fahrzeugs F stets kleiner oder gleich einem vorgegebenen Wert ist. Die Berechnung der Maximalgeschwindigkeit $v_{max}$ kann nach einer der oben beschriebenen Ausführungsformen durchgeführt werden.

**Patentansprüche**

1.  Verfahren zur Festlegung einer Maximalgeschwindigkeit ($v_{max}$) für ein Fahrzeug (F), mit den Schritten:

    Empfangen (S1) von Zustandsinformationen über einen Zustand von mindestens einer Fahrzeugkomponente (4) des Fahrzeugs (F), wobei die Zustandsinformationen Informationen über einen Zustand eines Bremssystems (4b) des Fahrzeugs (F) umfassen;
    Berechnen einer Bremszeit (TB) von einem Beginn eines Bremsvorgangs bis zum Stillstand des Fahrzeugs (F) anhand der Informationen über den Zustand des Bremssystems (4b);
    wobei das Berechnen der Bremszeit (TB) das Berechnen einer ersten Bremszeit (TTL) von einem Beginn des Bremsvorgangs bis zum Erreichen der vollen Bremsleistung, und das Berechnen einer zweiten Bremszeit ($T_{stop}$) vom Erreichen der vollen Bremsleistung bis zum Stillstand des Fahrzeugs (F) umfasst; und
    Festlegen (S2) einer Maximalgeschwindigkeit ($v_{max}$) des Fahrzeugs anhand der Zustandsinformationen, derart, dass ein Anhalteweg ($d_{anhalte}$) des Fahrzeugs (F) von einer Erkennung eines Gefahrenzustands bis zum Stillstand des Fahrzeugs (F) kleiner oder gleich einem vorgegebenen Wert ist, wobei die Maximalgeschwindigkeit ($v_{max}$) unter Berücksichtigung der Bremszeit (TB) festgelegt wird.

2.  Verfahren nach Anspruch 1, wobei die Zustandsinformationen Informationen über einen Zustand von mindestens einem Fahrzeugsensor (4a) des Fahrzeugs (F) umfassen, und wobei anhand der Informationen über den Zustand des mindestens einen Fahrzeugsensors (4a) eine Erkennungszeit (TD) berechnet wird, welche zur Erkennung des Gefahrenzustandes benötigt wird, und die Maximalgeschwindigkeit ($v_{max}$) unter Berücksichtigung der Erkennungszeit (TD) festgelegt wird.

3.  Verfahren nach Anspruch 2, wobei die Zustandsinformationen Informationen über einen Zustand eines Kommunikationssystems (4c) zwischen dem Bremssystem (4b) und dem mindestens einem Fahrzeugsensor (4a) umfassen, und wobei anhand der Informationen über den Zustand des Kommunikationssystems (4c) eine Kommunikationszeit (TT) für die Kommunikation zwischen dem Bremssystem (4b) und dem mindestens einen Fahrzeugsensor (4a) berechnet wird und die Maximalgeschwindigkeit ($v_{max}$) unter Berücksichtigung der Kommunikationszeit (TT) festgelegt wird.

4.  Vorrichtung (1) zur Festlegung einer Maximalgeschwindigkeit ($v_{max}$) für ein Fahrzeug (F), mit:

    einer Eingabeschnittstelle (2), welche dazu ausgebildet ist, Zustandsinformationen über einen Zustand von mindestens einer Fahrzeugkomponente (4) des Fahrzeugs (F) zu empfangen, wobei die Zustandsinformationen Informationen über einen Zustand eines Bremssystems (4b) des Fahrzeugs (F) umfassen; und
    einer Bestimmungseinrichtung (3), welche dazu ausgebildet ist, anhand der Informationen über den Zustand des Bremssystems (4b) eine Bremszeit (TB) von einem Beginn des Bremsvorgangs bis zum Stillstand des Fahrzeugs (F) zu berechnen, wobei das Berechnen der Bremszeit (TB) das Berechnen einer ersten Bremszeit (TTL) von einem Beginn des Bremsvorgangs bis zum Erreichen der vollen Bremsleistung, und das Berechnen einer zweiten Bremszeit ($T_{stop}$) vom Erreichen der vollen Bremsleistung bis zum Stillstand des Fahrzeugs (F) umfasst, und wobei die Bestimmungseinrichtung (3) dazu ausgebildet ist, anhand der Zustandsinformationen die Maximalgeschwindigkeit ($v_{max}$) des Fahrzeugs derart festzulegen, dass ein Anhalteweg ($d_{anhalte}$) des Fahrzeugs (F) von einer Erkennung eines Gefahrenzustands bis zum Stillstand des Fahrzeugs (F) kleiner oder gleich einem vorgegebenen Wert ist, wobei die Bestimmungseinrichtung (3) dazu ausgebildet ist, die Maximalgeschwindigkeit ($v_{max}$) unter Berücksichtigung der Bremszeit (TB) festzulegen.

5.  Vorrichtung (1) nach Anspruch 4, wobei die Zustandsinformationen Informationen über einen Zustand von mindestens einem Fahrzeugsensor (4a) des Fahrzeugs (F) umfassen, und wobei die Bestimmungseinrichtung (3) dazu ausgebildet ist, anhand der Informationen über den Zustand des mindestens einen Fahrzeugsensors (4a) eine Erkennungszeit (TD) zu berechnen, welche zur Erkennung des Gefahrenzustandes benötigt wird, und die Maximalgeschwindigkeit ($v_{max}$) unter Berücksichtigung der Erkennungszeit (TD) festzulegen.

6. Vorrichtung (1) nach Anspruch 4 oder 5, wobei die Zustandsinformationen Informationen über einen Zustand eines Kommunikationssystems (4c) zwischen dem Bremssystem (4b) und dem mindestens einem Fahrzeugsensor (4a) umfassen, und wobei die Bestimmungseinrichtung (3) dazu ausgebildet ist, anhand der Informationen über den Zustand des Kommunikationssystems (4c) eine Kommunikationszeit (TT) für die Kommunikation zwischen dem Bremssystem (4b) und dem mindestens einen Fahrzeugsensor (4a) zu berechnen und die Maximalgeschwindigkeit ($v_{max}$) unter Berücksichtigung der Kommunikationszeit (TT) festzulegen.

7. Automatisiertes Fahrsystem (5) für ein Fahrzeug (F), mit

    einer Vorrichtung (1) zur Festlegung einer Maximalgeschwindigkeit ($v_{max}$) für das Fahrzeug (F) nach einem der Ansprüche 4 bis 6; und
    mindestens einer Fahrzeugkomponente (4), welche mit der Vorrichtung (1) gekoppelt ist und dazu ausgebildet ist, Zustandsinformationen an die Vorrichtung (1) zu übertragen.

**Claims**

1. Method for defining a maximum speed ($v_{max}$) for a vehicle (F), comprising the following steps:

    receiving (S1) state information about a state of at least one vehicle component (4) of the vehicle (F), wherein the state information comprises information about a state of a brake system (4b) of the vehicle (F);
    calculating a braking time (TB) from a beginning of a braking procedure until the vehicle (F) is stationary based on the information about the state of the brake system (4b); wherein calculating the braking time (TB) comprises calculating a first braking time (TTL) from a beginning of the braking procedure until full braking power is achieved, and calculating a second braking time ($T_{stop}$) from achieving full braking power until the vehicle (F) is stationary; and
    defining (S2) a maximum speed ($v_{max}$) of the vehicle based on the state information such that a stopping distance ($d_{stopping}$) of the vehicle (F) from identifying a hazardous state until the vehicle (F) is stationary is less than or equal to a predefined value, wherein the maximum speed ($v_{max}$) is defined taking into consideration the braking time (TB).

2. Method according to Claim 1, wherein the state information comprises information about a state of at least one vehicle sensor (4a) of the vehicle (F), and wherein the information about the state of the at least one vehicle sensor (4a) is taken as a basis for calculating an identification time (TD) that is required to identify the hazardous state, and the maximum speed ($v_{max}$) is defined taking into consideration the identification time (TD).

3. Method according to Claim 2, wherein the state information comprises information about a state of a communication system (4c) between the brake system (4b) and the at least one vehicle sensor (4a), and wherein the information about the state of the communication system (4c) is taken as a basis for calculating a communication time (TT) for the communication between the brake system (4b) and the at least one vehicle sensor (4a) and the maximum speed ($v_{max}$) is defined taking into consideration the communication time (TT).

4. Device (1) for defining a maximum speed ($v_{max}$) for a vehicle (F), having:

    an input interface (2) that is designed to receive state information about a state of at least one vehicle component (4) of the vehicle (F), wherein the state information comprises information about a state of a brake system (4b) of the vehicle (F); and
    a determination apparatus (3) that is designed to take the information about the state of the brake system (4b) as a basis for calculating a braking time (TB) from a beginning of the braking procedure until the vehicle (F) is stationary, wherein calculating the braking time (TB) comprises calculating a first braking time (TTL) from a beginning of the braking procedure until full braking power is achieved, and calculating a second braking time ($T_{stop}$) from achieving full braking power until the vehicle (F) is stationary, and wherein the determination apparatus (3) is designed to take the state information as a basis for defining the maximum speed ($v_{max}$) of the

vehicle such that a stopping distance ($d_{stopping}$) of the vehicle (F) from identifying a hazardous state until the vehicle (F) is stationary is less than or equal to a predefined value, wherein the determination apparatus (3) is designed to define the maximum speed ($v_{max}$) taking into consideration the braking time (TB).

5. Device (1) according to Claim 4, wherein the state information comprises information about a state of at least one vehicle sensor (4a) of the vehicle (F), and wherein the determination apparatus (3) is designed to take the information about the state of the at least one vehicle sensor (4a) as a basis for calculating an identification time (TD) that is required to identify the hazardous state, and to define the maximum speed ($v_{max}$) taking into consideration the identification time (TD).

6. Device (1) according to Claim 4 or 5, wherein the state information comprises information about a state of a communication system (4c) between the brake system (4b) and the at least one vehicle sensor (4a), and wherein the determination apparatus (3) is designed to take the information about the state of the communication system (4c) as a basis for calculating a communication time (TT) for the communication between the brake system (4b) and the at least one vehicle sensor (4a) and to define the maximum speed ($v_{max}$) taking into consideration the communication time (TT).

7. Automated system (5) for a vehicle (F), having

> a device (1) for defining a maximum speed ($v_{max}$) for the vehicle (F) according to one of Claims 4 to 6; and
> at least one vehicle component (4) that is coupled to the device (1) and designed to transmit state information to the device (1).

**Revendications**

1. Procédé de spécification d'une vitesse maximale ($v_{max}$) d'un véhicule (F), le procédé comprenant les étapes suivantes :

> recevoir (S1) des informations d'état sur un état d'au moins un composant (4) du véhicule (F), les informations d'état comprenant des informations sur un état d'un système de freinage (4b) du véhicule (F) ;
> calculer un temps de freinage (TB) depuis le début d'un processus de freinage jusqu'à l'arrêt du véhicule (F) sur la base des informations sur l'état du système de freinage (4b) ; le calcul du temps de freinage (TB) comprenant le calcul d'un premier temps de freinage (TTL) depuis le début du processus de freinage jusqu'à ce que la pleine puissance de freinage soit atteinte, et le calcul d'un deuxième temps de freinage ($T_{stop}$) depuis le moment où la pleine puissance de freinage est atteinte jusqu'à l'arrêt du véhicule (F) ; et
> spécifier (S2) une vitesse maximale ($v_{max}$) du véhicule sur la base des informations d'état de manière à ce qu'une distance d'arrêt ($d_{anhalte}$) du véhicule (F) depuis le moment où un état de danger est détecté jusqu'à l'arrêt du véhicule (F) soit inférieure à ou égale à une valeur définie, la vitesse maximale ($v_{max}$) étant spécifiée avec prise en compte du temps de freinage (TB).

2. Procédé selon la revendication 1, les informations d'état comprenant des informations sur un état d'au moins un capteur (4a) du véhicule (F), et un temps de détection (TD), requis pour détecter l'état de danger, étant calculé sur la base des informations sur l'état de l'au moins un capteur de véhicule (4a), et la vitesse maximale ($v_{max}$) étant spécifiée avec prise en compte du temps de détection (TD).

3. Procédé selon la revendication 2, les informations d'état comprenant des informations sur un état d'un système de communication (4c) entre le système de freinage (4b) et l'au moins un capteur de véhicule (4a) et, sur la base des informations sur l'état du système de communication (4c), un temps de communication (TT) pour la communication entre le système de freinage (4b) et l'au moins un capteur de véhicule (4a) étant calculé et la vitesse maximale ($v_{max}$) étant spécifiée avec prise en compte du temps communication (TT).

4. Dispositif (1) de spécification d'une vitesse maximale ($v_{max}$) d'un véhicule (F), le dispositif comprenant :

> une interface d'entrée (2) qui est conçue pour recevoir des informations d'état sur un état d'au moins un composant (4) du véhicule (F), les informations d'état comprenant des informations sur un état d'un système de freinage (4b) du véhicule (F) ; et
> une unité de détermination (3) qui est conçue, sur la base des informations sur l'état du système de freinage (4b), pour calculer un temps de freinage (TB) depuis le début du processus de freinage jusqu'à l'arrêt du véhicule (F), le calcul du temps de freinage (TB) comprenant le calcul d'un premier temps de freinage (TTL) depuis le début du processus de freinage jusqu'à ce que la pleine puissance de freinage soit atteinte, et le calcul d'un deuxième temps de freinage ($T_{stop}$) depuis le moment où la pleine puissance de freinage est atteinte jusqu'à l'arrêt du véhicule (F), et l'unité de détermination (3) étant conçue, sur la base des informations d'état, pour spécifier la vitesse maximale ($v_{max}$) du véhicule de manière à ce qu'une distance d'arrêt ($d_{anhalte}$) du véhicule (F) depuis le moment où un état de danger est détecté jusqu'à l'arrêt du véhicule (F) soit inférieure ou égale à une valeur spécifiée, l'unité de détermination (3) étant conçue pour spécifier la vitesse maximale ($v_{max}$) avec prise en compte du temps de freinage (TB) .

5. Dispositif (1) selon la revendication 4, les informations d'état comprenant des informations sur un état d'au moins un capteur (4a) du véhicule (F), et l'unité de détermination (3) étant conçue, sur la base des informations sur l'état d'au moins un capteur de véhicule (4a), pour calculer un temps de détection (TD) requis pour détecter l'état de danger et pour spécifier la vitesse maximale ($v_{max}$) avec prise en compte du temps de détection (TD).

6. Dispositif (1) selon la revendication 4 ou 5, les informations d'état comprenant des informations sur un état d'un système de communication (4c) entre le système de freinage (4b) et l'au moins un capteur de véhicule (4a), et l'unité de détermination (3) étant conçue, sur la base des informations sur l'état du système de communication (4c), pour calculer un temps de communication (TT) pour la communication entre le système de freinage (4b) et l'au moins un capteur de véhicule (4a) et pour spécifier la vitesse maximale ($v_{max}$) avec prise en compte du temps de communication (TT).

7. Système de conduite automatisée (5) destiné à un véhicule (F), ledit système comprenant

un dispositif (1) destiné à spécifier une vitesse maximale ($v_{max}$) du véhicule (F) selon l'une des revendications 4 à 6 ; et
au moins un composant de véhicule (4) qui est couplé au dispositif (1) et qui est conçu pour transmettre des informations d'état au dispositif (1).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013213169 A1
- DE 102014010085 A1
- DE 102015207038 A1
- GB 2310731 A
- WO 9109275 A2